# EUROPÄISCHE PATENTSCHRIFT

(11) **EP 4 425 030 B1**
(45) Veröffentlichungstag und Bekanntmachung des Hinweises auf die Patenterteilung: **06.05.2026**
(21) Anmeldenummer: 23159967.1
(22) Anmeldetag: 03.03.2023
(51) Int. Cl.: F16L 53/38, B05C 17/005

(54) **HEIZSCHLAUCH MIT ABGEWINKELTEM ANSCHLUSSSTÜCK UND VERFAHREN ZUR HERSTELLUNG SOWIE AUFTRAGSSYSTEM**
HEATING HOSE WITH ANGLED CONNECTION PIECE AND METHOD FOR PRODUCING AND APPLICATION SYSTEM
TUYAU CHAUFFANT AVEC RACCORD COUDÉ ET PROCÉDÉ DE FABRICATION ET SYSTÈME D'APPLICATION

(43) Veröffentlichungstag der Anmeldung: 04.09.2024
(73) Patentinhaber: Robatech AG, 5630 Muri (CH)
(72) Erfinder: Hürlimann, Michael, 5620 Bremgarten (CH); Claudio, Hofer, 6332 Hagendorn (CH); Knecht, Stephan, 5712 Beinwil am See (CH)
(74) Vertreter: Franke, Markus

(56) Entgegenhaltungen:
- DE-A1- 102014 005 817
- US-A- 3 662 927
- US-A- 4 524 887
- US-A1- 2018 306 363

## Beschreibung

Die Erfindung betrifft einen Heizschlauch zum Durchleiten von einem fließfähigen Medium, beispielsweise zum Durchleiten eines Schmelzklebstoffs. Ferner betrifft die Erfindung ein Auftragssystem mit einem solchen Heizschlauch sowie ein Verfahren zur Herstellung des Heizschlauchs.

In verschiedensten Industrien werden wärmeschmelzende fließfähige Medien eingesetzt, beispielsweise Schmelzklebstoffe, um Teile miteinander zu verbinden. Schmelzklebstoffe werden beispielsweise bei der Herstellung von Verpackungsmitteln, wie beispielsweise Faltschachteln, Trays oder auch in der grafischen Industrie, der Bauindustrie und Holzindustrie sowie für die Herstellung von Matratzen eingesetzt. Derartige fließfähige Medien müssen in der Regel vor dem Verarbeiten durch Einwirken von Wärme von einem festen Zustand in einen flüssigen Zustand bzw. pastösen Zustand überführt werden. Über einen heizbaren Heizschlauch wird dann das verflüssigte fließfähige Medium einer Auftragseinrichtung zugeführt, die zum Auftragen des fließfähigen Mediums auf ein Substrat dient. Bei der Auftragseinrichtung kann es sich beispielsweise um eine Handpistole, einen Auftragskopf, insbesondere einen mit einem Dosierventil versehenen Auftragskopf, handeln.

Der Heizschlauch dient insbesondere zur Anbindung der Auftragseinrichtung an ein Schmelzgerät. Das Schmelzgerät dient dazu, den bei Zimmertemperatur festen, beispielsweise in Form eines Granulats vorliegenden, Schmelzklebstoff aufzuschmelzen. Mit dem Heizschlauch wird der verflüssigte Schmelzklebstoff anschließend zu einer Auftragseinrichtung, beispielsweise einem Auftragskopf, geleitet, wobei mittels der Auftragseinrichtung der Klebstoff auf das zu verklebende Substrat aufgetragen wird. Der Heizschlauch dient insbesondere dazu, das in den Heizschlauch eingeleitete fließfähige Medium in einem bestimmten Temperaturbereich zu halten und/oder das Medium in dem Heizschlauch auf eine bestimmte Solltemperatur oder in einen bestimmten Solltemperaturbereich zu erwärmen.

Der Heizschlauch dient somit als beheizter und flexibler Transportweg für das fließfähige Medium. Der Heizschlauch kann aufgrund seiner Flexibilität zwischen den zu verbindenden Komponenten, beispielsweise zwischen einem Schmelzgerät und einer Auftragseinrichtung, weitgehend frei verlegt werden.

Ein Heizschlauch weist in der Regel ein Anschlussstück auf, wobei das Anschlussstück dem Ankoppeln des Heizschlauchs an die externe Komponente, beispielsweise an die Auftragseinrichtung oder an das Schmelzgerät, dient zwecks Herstellens einer Fluidverbindung. In der Regel sind derartige Anschlussstücke gerade ausgebildet, sodass das Anschlussstück bzw. dessen Kopplungsachse bei gestrecktem Heizschlauch mit dem Heizschlauch fluchtet. Ein solcher Heizschlauch ist beispielsweise aus der US 2003/007789 A1 und der EP 0 080 811 A1 bekannt.

Die US 4,524,887 offenbart:
Heizschlauch zum Durchleiten von einem fließfähigem Medium aufweisend:
- einen flexiblen Heizschlauchkörper, aufweisend:
   ∘ einen Hochdruckschlauch, wobei der Hochdruckschlauch eine Schlauchseele zum Durchleiten des fließfähigen Mediums und eine die Schlauchseele umgebende Verstärkung aufweist,
   ∘ zumindest einen Heizleiter zum Erwärmen des in dem Hochdruckschlauch fließenden Mediums,
   ∘ eine den Hochdruckschlauch und den zumindest einen Heizleiter umgebende Wärmeisolationsschicht aus einem Wärmedämmmaterial,
   ∘ eine die Wärmeisolationsschicht umgebende Außenhülle,
- ein mit dem Hochdruckschlauch verbundenes Anschlussstück, wobei das Anschlussstück einen Durchgangskanal zum Durchleiten des fließfähigen Mediums durch das Anschlussstück und einen Kopplungsanschluss zum Herstellen einer Fluidverbindung zwischen dem Heizschlauch und einem externen Gerät durch Ankoppeln des externen Geräts entlang einer Kopplungsachse des Kopplungsanschlusses aufweist,
- eine Endkappe, wobei die Endkappe einen Endabschnitt des flexiblen Heizschlauchkörpers abdeckt.

Der Kopplungsanschluss ist bei der US 4,524,887 an einem Auslassende des Heizschlauchs ausgebildet. Bei dem Kopplungsanschluss handelt es sich um einen endseitigen Schraubanschluss des Hochdruckschlauchs, dessen Kopplungsachse bei gestrecktem Hochdruckschlauch bzw. bei gestrecktem Heizschlauch in Längserstreckungsrichtung des Heizschlauchs ausgebildet ist. Bezogen auf das Anschlussstück ist somit die Abgangsrichtung des Heizschlauchs von dem Anschlussstück identisch mit der Kopplungsachse des Anschlussstücks. Da die Endkappe in der Regel formstabiler bzw. steifer als der flexible Heizschlauchkörper ausgebildet ist, kann es dazu kommen, dass aufgrund der Platzverhältnisse der Heizschlauch nicht unmittelbar mit dem externen Gerät gekoppelt werden kann, da gegebenenfalls in der Kopplungsrichtung und/oder der Abgangsrichtung des Heizschlauchs die Platzverhältnisse nicht ausreichend sind und auch die Flexibilität des Heizschlauchs nicht ausreichend ist, um den Heizschlauch an das externe Gerät anzuschließen. Zudem sind kleine Biegeradien des Heizschlauchs, die gegebenenfalls aufgrund der beschränkten Platzverhältnisse notwendig wären, als nachteilig anzusehen. Um dieser Problematik zu begegnen ist es beispielsweise aus der US 4,524,887 bekannt, abgewinkelte Zwischenstücke zu verwenden. Nachteilig bei solchen abgewinkelten Zwischenstücken ist, dass diese Zwischenstücke dann freiliegen und nicht isoliert sind, wodurch es in diesem Bereich zu einem Abkühlen des fließfähigen Mediums kommen kann. Bei Bedarf müssten die Zwischenstücke dann mit einer separaten Isolation oder gar einer separaten Heizeinrichtung versehen werden.

Die DE 10 2014 005817 A1 offenbart einen Heizschlauch zum Durchleiten von einem fließfähigem Medium, wobei ein Anschlussstück als abgewinkeltes Anschlussstück ausgebildet ist, das einen ersten Schenkel und einen gewinkelt zu dem ersten Schenkel ausgebildeten zweiten Schenkel aufweist, wobei das Anschlussstück einen die Schenkel durchsetzenden Durchgangskanal zum Durchleiten des fließfähigen Mediums durch das Anschlussstück aufweist, wobei der erste Schenkel mit einer Schlauchseele verbunden ist, wobei der zweite Schenkel zumindest teilweise in einem von einer Endkappe umschlossenen Bereich ausgebildet ist und wobei der Kopplungsanschluss im Bereich des zweiten Schenkels ausgebildet ist.

Es besteht daher Bedarf an einem Heizschlauch, der die vorgenannten Nachteile überwindet. Zudem besteht Bedarf an einem flexiblen Auftragssystem. Ferner besteht Bedarf an einem einfachen Herstellungsverfahren für den Heizschlauch. Diese Aufgaben werden durch einen Heizschlauch, der die Merkmale des Anspruchs 1 aufweist, gelöst. Ferner gelöst werden diese Aufgaben durch ein Verfahren nach Anspruch 12 und durch ein Auftragssystem nach Anspruch 13.

Bei dem Heizschlauch ist vorgesehen, dass das Anschlussstück als abgewinkeltes Anschlussstück ausgebildet ist, das einen ersten Schenkel und einen gewinkelt zu dem ersten Schenkel ausgebildeten zweiten Schenkel aufweist, wobei das Anschlussstück einen die Schenkel durchsetzenden Durchgangskanal zum Durchleiten des fließfähigen Mediums durch das Anschlussstück aufweist, wobei der erste Schenkel mit dem Hochdruckschlauch verbunden ist, wobei der zweite Schenkel zumindest teilweise in einem von der Endkappe umschlossenen Bereich ausgebildet ist und wobei der Kopplungsanschluss im Bereich des zweiten Schenkels ausgebildet ist.

Dadurch ist eine besonders gute Wärmeisolation im Bereich des Anschlussstücks sowie eine abgewinkelte Abgangsrichtung des Heizschlauchs ohne die Verwendung von separaten Zwischenstücken verwirklicht. Dies ist insbesondere dahingehend als vorteilhaft anzusehen, dass im Bereich zwischen einem Auftragskopf und dem Heizschlauch ein Abkühlen des fließfähigen Mediums vermieden werden sollte, um einen besonders guten und sauberen Auftrag des fließfähigen Mediums zu erreichen. Ein Abkühlen des Mediums ist insbesondere bei unbeheizten Auftragsköpfen als nachteilig anzusehen. Aber auch bei beheizten Auftragsköpfen kann es sein, dass die Heizleistung nicht ausreichend ist, um das abgekühlte Medium wieder auf die gewünschte Verarbeitungstemperatur zu erwärmen. Vor allem nach einem längeren Betriebsunterbruch oder nach dem Einschalten eines kalten Auftragssystems sind nicht ausreichend isolierte, insofern freiliegende Übergänge, als nachteilig anzusehen. Dies ist insbesondere problematisch, da die Temperatur des Mediums in der Regel nicht unmittelbar gemessen wird, sondern lediglich die Temperatur des Auftragskopfs bzw. eines Bereichs des Auftragskopfs.

Bei dem externen Gerät handelt es sich vorzugsweise um einen Auftragskopf, der mittels des Heizschlauchs mit fließfähigem Medium versorgt wird. Es kann sich bei dem externen Gerät aber auch um ein Gerät zum Aufschmelzen des Klebstoffs handeln, wobei dieser aufgeschmolzene Klebstoff dann in den Heizschlauch geleitet wird.

Es ist vorgesehen, dass der Kopplungsanschluss einen Bestandteil einer Stecckupplung bildet, vorzugsweise die Steckkupplung als Bestandteile einen Stecker und eine Buchse aufweist, wobei der Kopplungsanschluss den Stecker der Stecckupplung bildet. Eine Steckkupplung erleichtert das Verbinden von Heizschlauch und externem Gerät.

Vorzugsweise ist der Kopplungsanschluss außerhalb der Endkappe angeordnet, und steht somit gegenüber der Endkappe hervor. Dadurch wird das Herstellen der Verbindung erleichtert. Insbesondere bei einer Steckkupplung hat diese Gestaltung den Vorteil, dass der freiliegende Bereich, nämlich der Stecker, zumindest teilweise in dem externen Gerät zur Anordnung kommt, das in der Regel beheizt ist. Dadurch kann der Heizschlauch mit seiner Endkappe besonders nah an das externe Gerät gebracht werden, was sich vorteilhaft auf die Wärmeisolation im Kopplungsbereich auswirkt.

Vorzugsweise ist das Anschlussstück einteilig ausgebildet. Vorzugsweise ist das Anschlussstück steif ausgebildet.

Es wird als vorteilhaft angesehen, wenn die Verbindung zwischen dem ersten Schenkel und dem Hochdruckschlauch als Schraubverbindung ausgebildet ist, deren Schraubenachse der Längsachse des ersten Schenkels entspricht. Während des Herstellens der Heizschläuche, insbesondere bei einem Wickeln der Heizleiter und/oder einem Wickeln der Wärmeisolationsschicht um den Hochdruckschlauch, der in der Regel als vorgefertigtes Teil zugekauft wird, würde ein abgewinkeltes Anschlussstück, welches die Rotationssymmetrie stören würde, hinderlich sein. Durch die Schraubverbindung kann das Anschlussstück besonders einfach nach dem Herstellen des Heizschlauchkörpers, bei Bedarf, montiert werden. Anschließend wird die Endkappe, beispielsweise in Form von zwei Heizschlauchschalen, montiert. Trotz der an sich lösbaren Verbindung zwischen dem Anschlussstück und dem Hochdruckschlauch ist durch die Endkappe verhindert, dass die die Verbindung, beispielsweise eine Überwurfmutter der Verbindung, gelöst werden kann. Somit ist ein unlösbarer Verbund zwischen dem Hochdruckschlauch und dem Anschlussstück gebildet, sodass das gewinkelte Anschlussstück einen integralen Bestandteil des Heizschlauchs bildet.

Es ist aber auch denkbar, dass das gewinkelte Anschlussstück und der Hochdruckschlauch nicht über eine lösbare, sondern über eine unlösbare Verbindung miteinander verbunden sind, beispielsweise miteinander verpresst sind.

In einer bevorzugten Ausführungsform ist vorgesehen, dass die Endkappe mit einer an einer Außenseite des zweiten Schenkels ausgebildeten Nut in Eingriff ist. Dadurch wird eine stabile Verbindung zwischen dem Anschlussstück und der Endkappe gebildet. Zudem wird die Endkappe über das Zusammenwirken mit der Nut in Position gehalten.

Vorzugsweise ist die Endkappe korrespondierend zu dem abgewinkelten Anschlussstück abgewinkelt ausgebildet. Dadurch wird der Bauraum für die Endkappe möglichst gering gehalten. Zudem ist für den Verwender unmittelbar ersichtlich, wo sich die Kopplungsfläche bzw. der Kopplungsanschluss befindet. Dies Vereinfacht die Handhabung.

Vorzugsweise weist die Endkappe zwei Halbschalen auf. Durch die Ausbildung der Endkappe durch zwei Halbschalen ist die Montage besonders einfach möglich. Insbesondere kann zunächst der Heizschlauchkörper hergestellt bzw. bereitgestellt werden. Dann kann das Anschlussstück mit dem Hochdruckschlauch verbunden werden. Im Anschluss daran können die beiden Halbschalen montiert werden, um die Endkappe zu bilden. Als besonders vorteilhaft wird es angesehen, wenn die Halbschalen lösbar miteinander verbunden sind, beispielsweise verklipst oder verschraubt sind.

In einer besonders bevorzugten Ausführungsform ist vorgesehen, dass die Endkappe formstabil ausgebildet ist, somit weniger flexibel ist als der Heizschlauchkörper. Dadurch wird das Koppeln des Heizschlauchs mit dem externen Gerät erleichtert, da durch die formstabile Endkappe eine präzise Führung des Heizschlauchs zum Kopplungsbereich des externen Geräts ermöglicht ist. Bei einer als Steckkupplung ausgebildeten Kupplung zwischen dem Endgerät und dem Heizschlauch ist es zudem nicht notwendig, dass viel Bauraum im Bereich der Kupplung zur Verfügung steht. Vielmehr kann die Endkappe auch in einem dem Kopplungsanschluss abgewandten Bereich der Endkappe ergriffen und gehandhabt werden. Da die Endkappe formstabil ist, ist dennoch eine präzise Führung des Kopplungsanschlusses beim Koppeln und Endkoppeln möglich. Zudem hat eine formstabile Endkappe den Vorteil, dass die mechanische Belastung der im Bereich des Endabschnitts ausgebildeten Komponenten des Heizschlauchs verringert ist.

Es wird als vorteilhaft angesehen, wenn das Material der Endkappe temperaturbeständig und schlagzäh ist. Vorzugsweise ist das Material temperaturbeständig bis zu einer Temperatur von zumindest 150° C, vorzugsweise zumindest 200° C, besonders bevorzugt zumindest 250° C. Als besonders vorteilhaft wird es angesehen, wenn die Endkappe aus einem steifen Material besteht. Vorzugsweise besteht die Endkappe und/oder bestehen die Halbschalen aus Polyphenylensulfid (PPS), insbesondere glasfaserverstärktem PPS, oder aus glasfaserverstärktem flüssigkristallinem Polymer (engl. liquid crystal polymer, LCP). Es sind aber auch andere Materialien für die Endkappe denkbar, insbesondere glasfaserverstärkte, temperaturbeständige Kunststoffe.

Als besonders vorteilhaft wird es angesehen, wenn die Wärmeisolationsschicht zumindest einen Teilbereich des ersten Schenkels umschließt. Vorzugsweise erstreckt sich die Wärmeisolationsschicht bis über den Winkelbereich des Anschlussstücks, somit teilweise bis über den zweiten Schenkel.

**In** einer bevorzugten Ausführungsform ist vorgesehen, dass der Verbindungsabschnitt und/oder die Wärmeisolationsschicht endseitig gegenüber der Außenhülle hervorstehen. Die Außenhülle muss sich somit nicht notwendigerweise vollständig über den Endabschnitt erstrecken. Es wird vielmehr als vorteilhaft angesehen, wenn die Außenhülle sich nur teilweise im Bereich des Endabschnitts erstreckt.

Es wird als vorteilhaft angesehen, wenn sich die Außenhülle zumindest bis in den von der Endkappe umschlossenen Bereich erstreckt.

**In** einer bevorzugten Ausführungsform ist vorgesehen, dass der Durchgangskanal des Anschlussstücks durch eine erste, entlang einer Längsachse des ersten Schenkels des Anschlussstücks verlaufenden Bohrung und durch eine zweite entlang einer Längsachse des zweiten Schenkels des Anschlussstücks verlaufende Bohrung gebildet ist.

Vorzugsweise besteht das Anschlussstück aus einem Metall oder aus einer Metalllegierung.

Es ist vorgesehen, dass ein Winkel zwischen dem ersten Schenkel und dem zweiten Schenkel des Anschlusselements zwischen 40° und 50°, vorzugsweise 45°, beträgt.

Vorzugsweise handelt es sich bei der Endkappe und/oder bei den Halbschalen um Spritzgussteile. Die Endkappe kann aber auch an den Heizschlauchkörper angegossen sein.

Der Heizschlauch ist insbesondere elektrisch beheizbar. Vorzugsweise ist der Heizschlauch dazu eingerichtet, das fließfähige Medium auf einer Betriebstemperatur von 20° C bis 250° C zu halten. Vorzugsweise ist der Heizschlauch druckstabil bis zu einem Betriebsdruck des fließfähigen Mediums von zumindest 100 bar, vorzugsweise von zumindest 300 bar, insbesondere von bis zu 400 bar. Eine Schlauchlänge beträgt vorzugsweise von 0,6 m bis 10 m. Die dem Leiten des fließfähigen Mediums dienende Schlauchseele des Hochdruckschlauchs weist vorzugsweise einen Innendurchmesser von 2 mm bis 40 mm, insbesondere von 6 mm bis 40 mm, bevorzugt von 6 mm bis 25 mm, auf. Der Heizschlauch weist vorzugsweise einen Außendurchmesser von 20 mm bis 70 mm, insbesondere von 27 mm bis 57 mm, auf. Die Endkappe weist vorzugsweise eine Längserstreckung von 100 mm bis 300 mm auf.

Vorzugsweise ist der Heizschlauch im mit dem externen Gerät gekoppelten Zustand um die Achse des Kopplungsanschlusses drehbar. Dadurch kann der Heizschlauch in einfacher Art und Weise in seiner Abgangsrichtung bezüglich des externen Geräts verändert werden. Als besonders vorteilhaft wird es angesehen, wenn das Anschlussstück lediglich im drucklosen Zustand des fließfähigen Mediums drehbar ist.

Der Heizschlauch mit einem abgewinkelten Anschlussstück und einer als Bestandteil einer drehbaren Steckkupplung ausgebildeten Kopplungsanschluss hat den Vorteil, dass der Heizschlauch ohne zusätzliche Teile und ohne Werkzeuge in unterschiedlichen Anordnungen und Abgangsrichtungen montiert und betrieben werden kann. Dies ermöglicht es, die Klebstoff-Auftragsvorrichtung optimal an das zu klebende Produkt und optimal an die Einbauverhältnisse in einer Produktionsanlage anzupassen, ohne dass unterschiedliche Varianten oder Zwischenstücke verwendet werden müssen.

Das erfindungsgemäße Verfahren betrifft ein Verfahren zum Herstellen des erfindungsgemäßen Heizschlauchs oder einer der vorbeschriebenen Ausführungsformen des Heizschlauchs. Das Verfahren weist die folgenden Verfahrensschritte auf:
a) Herstellen oder Bereitstellen eines flexiblen Heizschlauchkörpers, der flexible Heizschlauchkörper aufweisend:
   ∘ einen Hochdruckschlauch, wobei der Hochdruckschlauch eine Schlauchseele zum Durchleiten des fließfähigen Mediums und eine die Schlauchseele umgebende Verstärkung aufweist,
   ∘ zumindest einen Heizleiter zum Erwärmen des in dem Hochdruckschlauch fließenden Mediums,
   ∘ eine den Hochdruckschlauch und den zumindest einen Heizleiter umgebende Wärmeisolationsschicht aus einem Wärmedämmmaterial,
   ∘ eine die Wärmeisolationsschicht umgebende Außenhülle,
b) Bereitstellen eines abgewinkelten Anschlussstücks, wobei das Anschlussstück einen ersten Schenkel und einen gewinkelt zu dem ersten Schenkel ausgebildeten zweiten Schenkel aufweist, wobei das Anschlussstück einen die Schenkel durchsetzenden Durchgangskanal zum Durchleiten des fließfähigen Mediums durch das Anschlussstück aufweist, wobei der erste Schenkel mit dem Hochdruckschlauch lösbar verbindbar ist, wobei der zweite Schenkel einen Kopplungsanschluss aufweist zum Herstellen einer Fluidverbindung zwischen dem Heizschlauch und einem externen Gerät durch Ankoppeln des externen Geräts entlang einer Kopplungsachse des Kopplungsanschlusses,
c) Herstellen der lösbaren Verbindung zwischen dem Hochdruckschlauch und dem ersten Schenkel des Anschlussstücks, wobei der Verfahrensschritt c) nach den Verfahrensschritten a) und b) erfolgt,
d) Anbringen einer Endkappe an einem Endabschnitt des Heizschlauchkörpers, derart, dass die Endkappe den Endabschnitt des flexiblen Heizschlauchkörpers abdeckt, wobei der zweite Schenkel des Anschlussstücks zumindest teilweise in einem von der Endkappe umschlossenen Bereich ausgebildet ist, wobei der Verfahrensschritt d) nach dem Verfahrensschritt c) erfolgt.

Der Vorteil des beschriebenen Verfahrens liegt darin begründet, dass ein übliches Herstellungsverfahren für den Heizschlauchkörper beibehalten werden kann, da das abgewinkelte Anschlussstück erst nachträglich mit dem Hochdruckschlauch verbunden wird. Während eines Wickelns der Heizschläuche würde ein abgewinkeltes Ende bzw. Anschlussstück hinderlich sein. Vorliegend wird das Anschlussstück erst nach dem Wickelvorgang montiert. Anschliessend wird die Endkappe, beispielsweise in Form von Heizschlauchschalen, montiert. Durch die Endkappe wird das Anschlussstück teilweise abgedeckt und insoliert.

Vorzugsweise wird oder ist der Heizleiter wendelförmig um den Hochdruckschlauch gewickelt.

Vorzugsweise wird das Anschlussstück mit dem Hochdruckschlauch verschraubt.

Wie bereits ausgeführt, bietet der erfindungsgemäße Heizschlauch besondere Vorteile bei Verwendung mit externen Geräten, insbesondere mit einem Auftragskopf da der Heizschlauch in einfacher Art und Weise eine bauraumoptimierte Anordnung der Komponenten ermöglicht. Das erfindungsgemäße Auftragssystem weist dementsprechend den erfindungsgemäßen Heizschlauch oder eine der vorbeschriebenen Ausführungsformen des Heizschlauchs auf. Ferner weist das Auftragssystem einen Auftragskopf zum Ausgeben des fließfähigen Mediums auf, wobei der Auftragskopf eine zu dem Kopplungsanschluss korrespondierende Kopplungsbuchse aufweist, wobei der Kopplungsanschluss und die Kopplungsbuchse eine Stecckupplung bilden. Das Koppeln der Steckkupplungsbestandteile, nämlich das Einstecken des Kopplungsanschlusses in die Kopplungsbuchse erfolgt entlang der Kopplungsachse des Kopplungsanschlusses. Der Auftragskopf weist ferner ein Dosierventil auf, um das dem Auftragskopf über den Heizschlauch zugeführte fließfähige Medium selektiv aus einer Ausgabeöffnung des Auftragskopfs auszugeben, wobei das Dosierventil eine Ventilstange aufweist, wobei die Ventilstange zwischen einer Verschlussstellung, in der die Ventilstange die Ausgabeöffnung des Auftragskopfs verschließt, und einer Offenstellung, in der die Ventilstange die Ausgabeöffnung des Auftragskopfs freigibt, entlang einer Längsachse der Ventilstange verschiebbar ist, wobei die Kopplungsachse und die Längsachse der Ventilstange zueinander gewinkelt sind, wobei der Kopplungsanschluss in der Kopplungsbuchse um die Kopplungsachse drehbar ist. Durch diese Gestaltung können unterschiedliche Abgangsrichtungen des Heizschlauchs von dem Auftragskopf durch Drehen des Heizschlauchs um die Kopplungsachse verwirklicht werden. Zudem lässt sich der Heizschlauch einfach und schnell ohne Werkzeuge vom Auftragskopf trennen.

Im Zusammenhang mit einer solchen Steckkupplung zwischen Anschlussstück und Auftragskopf wird es als vorteilhaft angesehen, wenn das Anschlussstück in der Kopplungsbuchse gesichert ist. Im Betrieb steht das fließfähige Medium typischerweise unter hohem Druck, beispielweise 100 bar bis 300 bar. Eine Sicherung des Anschlussstücks in der Kopplungsbuchse in der gekoppelten Position kann über einen quer zu der Einsteckrichtung verschiebbaren Verschlussschieber erfolgen. In einer bevorzugten Ausführungsform weist der Verschlussschieber zwei Sicherungsschenkel auf. Die Kopplungsbuchse weist zwei Durchgangsöffnungen zum Einschieben der Sicherungsschenkel auf, wobei die Durchgangsöffnungen die Kopplungsbuchse durchsetzen, derart, dass die Sicherungsschenkel von zwei gegenüberliegenden Seiten aus in die Durchgangsöffnungen einschiebbar sind. Der Kopplungsanschluss weist an seiner Außenseite eine umlaufende Sicherungsnut auf, wobei in der gekoppelten Position die Durchgangsöffnungen mit der Sicherungsnut fluchten. Somit können die Schenkel durch die Durchgangsöffnungen hindurch in die Sicherungsnut eingeschoben und dadurch mit dieser in Eingriff gebracht werden zum Erreichen einer Verschlussstellung. In der Verschlussstellung des Verschlussschiebers sind die Sicherungsschenkel dementsprechend durch die Durchgangsöffnungen in die umlaufende Sicherungsnut eingeschoben, zum Sichern des Anschlussstücks in der Kopplungsbuchse. Zum Lösen der Sicherung werden die Schenkel und die Sicherungsnut durch Verschieben bzw. Herausziehen des Verschlussschiebers außer Eingriff gebracht. In dieser Offenstellung des Verschlussschiebers kann der Heizschlauch von dem Auftragskopf entkoppelt werden. In der Verschlussstellung des Verschlussschiebers wird durch den Verschlussschieber ein Herausdrücken des Anschlussstücks und somit ein Lösen der Steckkupplung aufgrund der Druckkräfte vermieden. Zudem ist das Anschlussstück dadurch gegen ein unbeabsichtigtes Entnehmen gesichert.

Dadurch, dass die Schenkel des Verschlussschiebers von zwei gegenüberliegenden Seiten aus in die Durchgangsöffnungen einschiebbar sind, kann der Verschlussschieber an zwei unterschiedlichen Positionen montiert werden, so dass der Verschlussschieber beispielsweise entweder nach links oder nach rechts bezüglich dem Auftragskopf herausgezogen werden kann. Dadurch kann die Einbaulage des Verschlussschiebers in einfacher Art verändert werden, beispielsweise um eine Anpassung an die vorhandenen Platzverhältnisse und die Zugänglichkeit zu dem Auftragskopf vorzunehmen.

Es wird als vorteilhaft angesehen, wenn der Verschlussschieber über eine auf die Kopplungsbuchse aufgesteckte Sicherungskappe verliersicher in der Kopplungsbuchse gehalten ist. Durch die Sicherungskappe wird zudem die Kopplungsbuchse nach außen isoliert, wodurch Verletzungen des Bedieners aufgrund der ggf. heißen Anschlussbuchse und Wärmeverluste im Bereich der Anschlussbuchse verringert werden. Vorzugsweise weist die Sicherungskappe einen Deckelabschnitt mit einer Öffnung für das Anschlussstück und einen an den Deckelabschnitt anschließenden Mantelabschnitt auf, wobei die Sicherungsschenkel den Mantelabschnitt durchsetzen, wobei ein Verschieben des Verschlussschiebers von der Verschlussstellung über eine Offenstellung, in der die Sicherungsschenkel und die Sicherungsnut außer Eingriff sind, hinaus durch einen mit dem Mantelabschnitt zusammenwirkenden Anschlag des jeweiligen Sicherungsschenkels verhindert ist. Somit kann der Verschlussschieber bei aufgesteckter Endkappe nicht vollständig herausgezogen werden und ist dadurch verliersicher am Auftragskopf gehalten und dennoch von der Verschlussstellung in die Offenstellung überführbar.

Vorzugsweise ist die Sicherungskappe in zwei unterschiedlichen Drehstellung auf die Kopplungsbuchse aufsteckbar, damit dieselbe Sicherungskappe für beide Einschieberichtungen bzw. Positionen des Verschlussschiebers verwendet werden kann.

Vorzugsweise ist die Sicherungskappe mit der Kopplungsbuchse oder einer Abdeckung des Auftragskopfs verrastet.

Vorzugsweise entspricht der Winkel zwischen der Längsachse der Ventilstange und der Kopplungsachse dem Winkel zwischen den Schenkeln des Anschlussstücks, insbesondere 45°. Dadurch kann in einfacher Weise eine Abgangsrichtung des Heizschlauchs von 0° zu der Längsachse der Ventilstange und eine Abgangsrichtung des Heizschlauchs von 90° zu der Längsachse der Ventilstange mit denselben Komponenten verwirklicht werden. Dazu muss der Heizschlauch lediglich um 180° um die Kopplungsachse gedreht werden, um von einer Abgangsrichtung von 0° zu einer Abgangsrichtung von 90° zu wechseln.

In den nachfolgenden Figuren wird die Erfindung anhand von einem Ausführungsbeispiel näher erläutert, ohne auf dieses beschränkt zu sein. Es zeigen:
- Fig. 1: ein Auftragssystem mit einem Auftragskopf und einem Heizschlauch in einer ersten Konfiguration in einer perspektivischen Ansicht,
- Fig. 2: das Auftragssystem gemäß Fig. 1 in einer Seitenansicht,
- Fig. 3: das Auftragssystem gemäß Fig. 1 in einem Längsschnitt,
- Fig. 4: der Heizschlauch in einer Ansicht gemäß dem Pfeil IV in Fig. 5,
- Fig. 5: der Heizschlauch in einer Ansicht gemäß dem Pfeil V in Fig. 6,
- Fig. 6: der Heizschlauch in einer Ansicht gemäß dem Pfeil VI in Fig. 5,
- Fig. 7: innenliegende Komponenten des Heizschlauchs in einer perspektivischen Ansicht,
- Fig. 8: der Heizschlauch in einem Längsschnitt,
- Fig. 9: der Heizschlauch in einem Querschnitt,
- Fig. 10: der Heizschlauch in einer Innenansicht,
- Fig. 11: ein Heizschlauchkörper des Heizschlauchs in einem Längsschnitt,

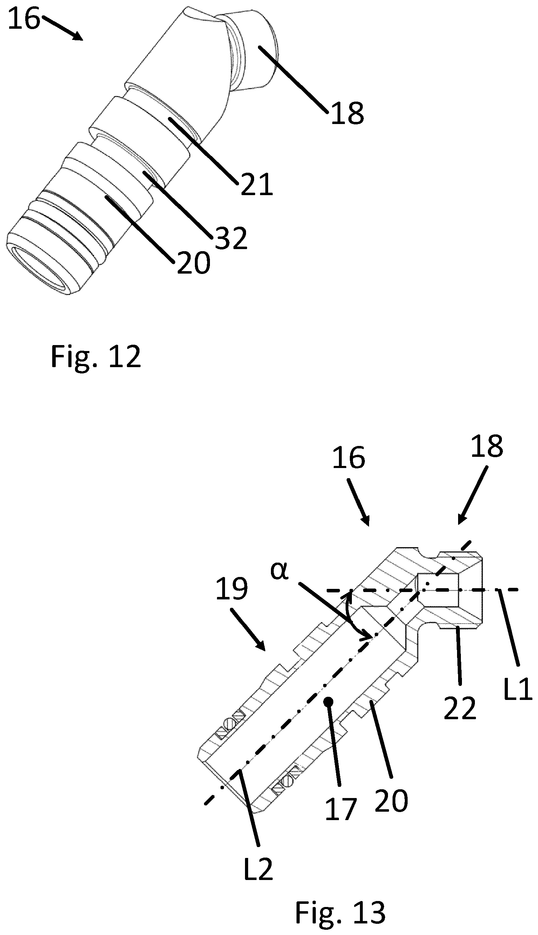

- Fig. 12: ein Anschlussstück des Heizschlauchs in einer perspektivischen Ansicht,
- Fig. 13: das Anschlussstück in einer Schnittansicht,
- Fig. 14: das Auftragssystem gemäß Fig. 1 in einer zweiten Konfiguration in einer Seitenansicht
- Fig. 15: ein Teilbereich der Fig, 3,
- Fig. 16: das Auftragssystem gemäß Fig. 1 in einem Querschnitt mit einem Verschlussschieber in einer Verschlussstellung,
- Fig. 17: das Auftragssystem gemäß Fig. 1 in einem Querschnitt mit einem Verschlussschieber in einer Offenstellung,

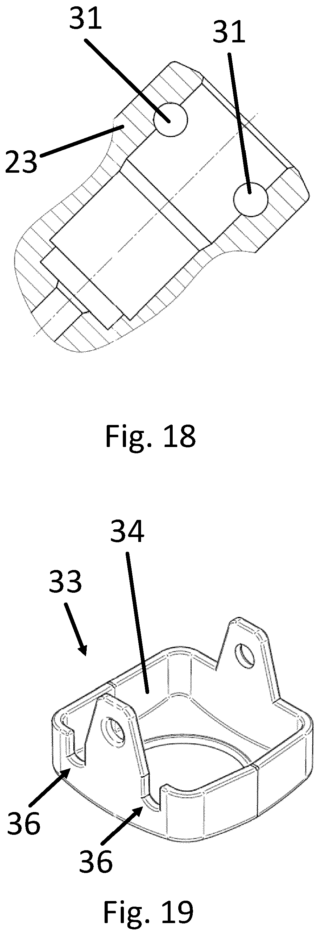

- Fig. 18: eine Anschlussbuchse des Auftragskopfs in einem Längsschnitt
- Fig. 19: eine Sicherungskappe in einer perspektivischen Ansicht.

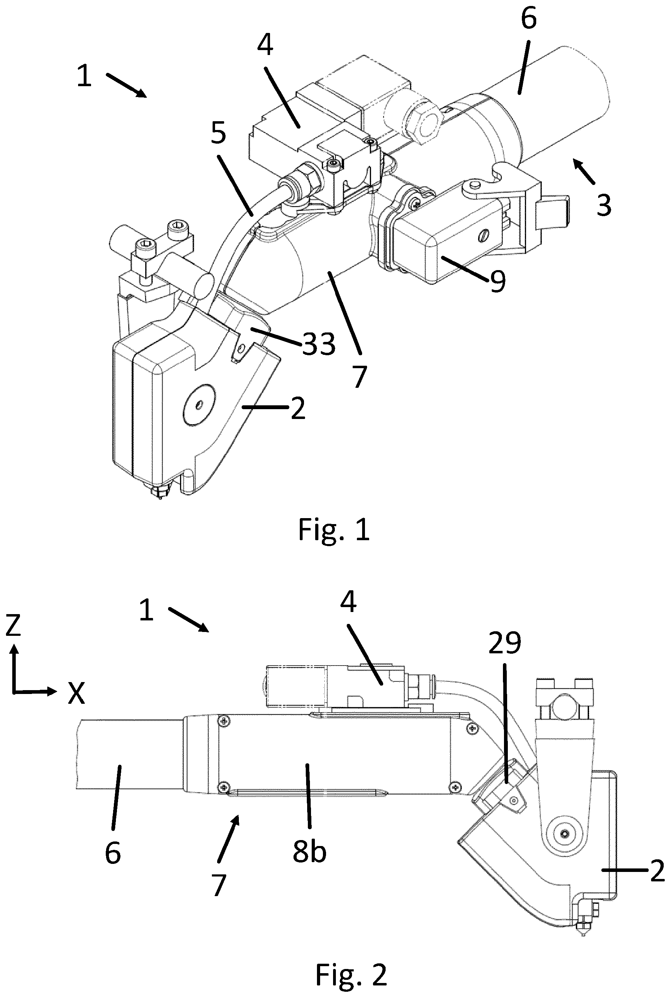

Die Fig. 1 und 2 zeigen ein Auftragssystem 1 zum Auftragen von einem Schmelzklebstoff. Das Auftragssystem 1 weist einen Auftragskopf 2 auf. Ferner weist das Auftragssystem 1 einen Heizschlauch 3 auf, wobei der Heizschlauch 3 mit dem Auftragskopf 2 gekoppelt ist. Der Heizschlauch 3 dient dem Zuführen von in einem Schmelzgerät aufgeschmolzenem Klebstoff zu dem Auftragskopf 2. Der Heizschlauch 3 ist zu diesem Zweck an seinem Einlassende mit dem Schmelzgerät gekoppelt, somit fluidverbunden, und an seinem Auslassende mit dem Auftragskopf 2 gekoppelt, somit fluidverbunden. Der Auftragskopf 2 weist ein Dosierventil 24 auf, um das dem Auftragskopf 2 über den Heizschlauch 3 zugeführte fließfähige Medium selektiv aus einer Ausgabeöffnung 25 des Auftragskopfs 2 auszugeben. Das Dosierventil 24 weist eine Ventilstange 26 auf, wobei die Ventilstange 26 zwischen einer Verschlussstellung, in der die Ventilstange 26 die Ausgabeöffnung 25 des Auftragskopfs 2 verschließt, und einer Offenstellung, in der die Ventilstange 26 die Ausgabeöffnung 25 des Auftragskopfs 2 freigibt, entlang einer Längsachse L3 der Ventilstange 26 verschiebbar ist. Die Betätigung des Dosierventils 24 erfolgt mittels eines pneumatisch betätigbaren Aktuators, dessen Kolben mit der Ventilstange 26 wirkverbunden ist. Ein Magnetventil 4 zum Schalten von Druckluft ist über einen Schlauch 5 mit dem Auftragskopf 2 verbunden. Je nach Schaltstellung des Magnetventils 4 wird der Kolben des Aktuators mit Druckluft beaufschlagt und das Dosierventil 24 entsprechend betätigt.

Der Heizschlauch 3 weist einen flexiblen Heizschlauchkörper 6 auf, wobei der Heizschlauchkörper 6 im Bereich eines dem Auftragskopf 2 zugewandten Endabschnitts mit einer formstabilen Endkappe 7 versehen ist, wobei diese Endkappe 7 vorliegend aus zwei Halbschalen 8a, 8b gebildet ist. Die Endkappe 7 umschließt den Heizschlauchkörper 6 in Umfangsrichtung umlaufend und deckt diesen stirnseitig ab. Die elektrischen Leitungen des Heizschlauchkörpers 6, beispielsweise die Anschlüsse für Heizleiter 13 des Heizschlauchkörpers 6, sind durch die Endkappe 7, vorliegend die Halbschale 8a, hindurch nach außen geführt und mit einer an der Halbschale 8a angebrachten Anschlussbuchse 9 verkabelt. Zudem können auch Steuerleitungen für externe Geräte, beispielsweise für das Schmelzgerät und/oder den Auftragskopf 2, in dem Heizschlauch 3 vorgesehen und mit der Anschlussbuchse 9 verkabelt sein. Über die in dem Heizschlauch 3 integrierten Steuerleitungen und Versorgungsleitungen können dann auch elektrische Verbindungen zwischen dem Auftragskopf 2 und dem Schmelzgerät hergestellt werden. Im vorliegenden Fall ist der Auftragskopf 2 mit einem Kabel, das wiederum mit einem zu der Anschlussbuchse 9 korrespondierenden Anschlussstecker verbunden ist, versehen.

Kabel und Stecker sind in den Figuren nicht dargestellt. Dieser Anschlussstecker kann in die Anschlussbuchse 9 des Heizschlauchs 3 eingesteckt und dadurch eine elektrische Verbindung zwischen dem Auftragskopf 2 und Schmelzgerät über den Heizschlauch 3 hergestellt werden. Über diese elektrische Verbindung zwischen dem Auftragskopf 2 und dem Schmelzgerät wird eine Heizpatrone 27 vom Auftragskopf 2 mit elektrischer Energie versorgt. Zudem wird über diese Verbindung ein Temperatursensor 28 im Auftragskopf 2 mit der Steuereinrichtung vom Schmelzgerät verbunden.

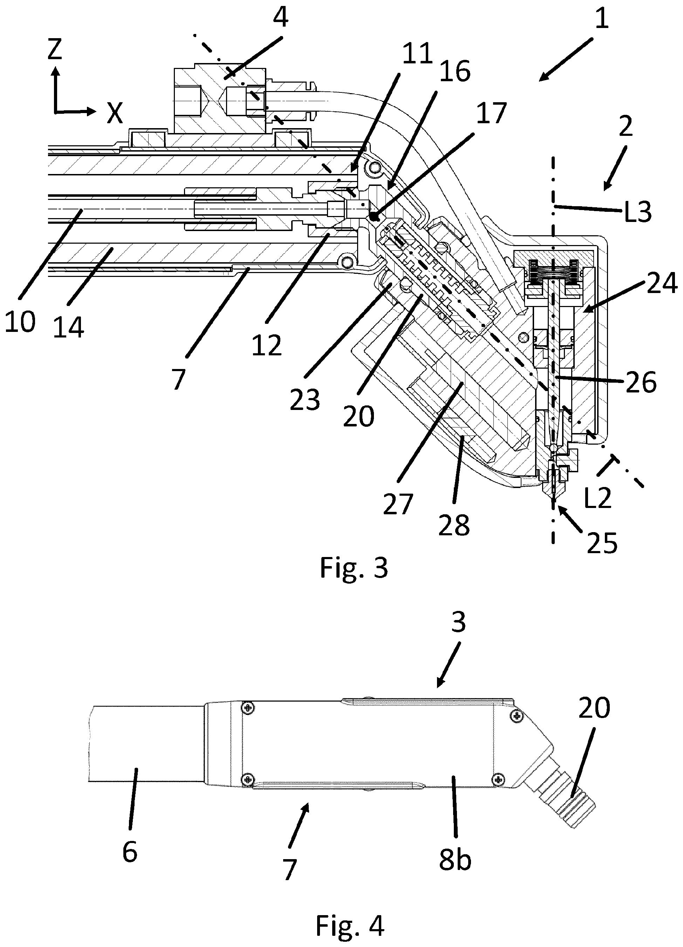

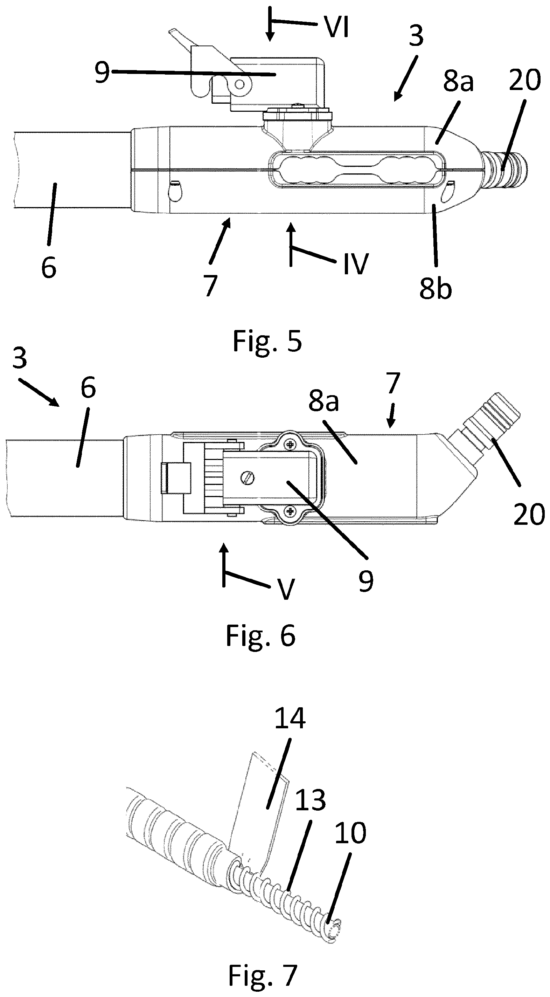

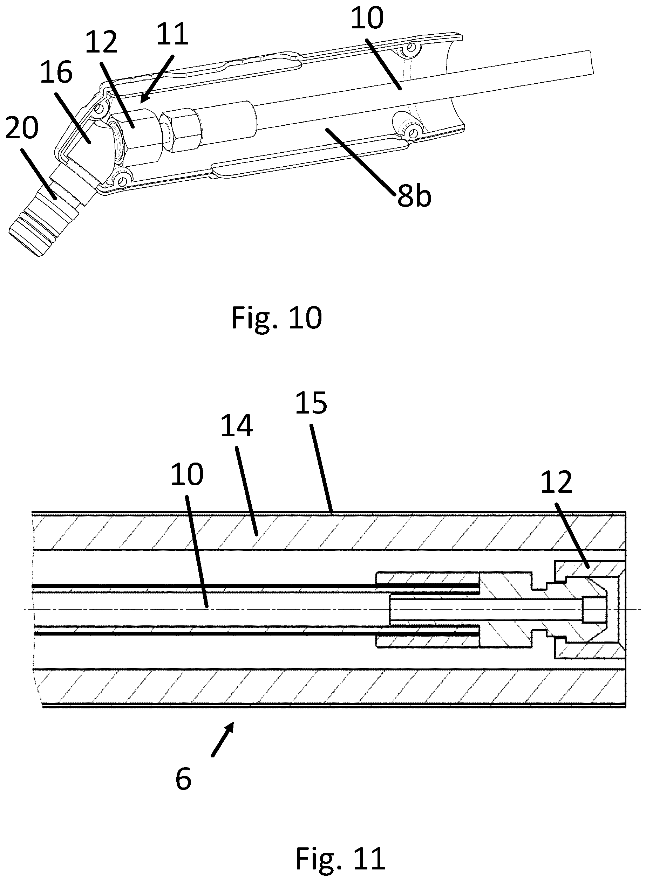

Der Heizschlauchkörper 6 weist einen flexiblen Hochdruckschlauch 10 auf, wobei der Hochdruckschlauch 10 eine innenliegende Schlauchseele aus Kunststoff zum Durchleiten des fließfähigen Mediums und eine die Schlauchseele umgebende Verstärkung, beispielsweise in Form eines Stahlgeflechts, aufweist, um die notwendige Druckfestigkeit zu erreichen. An seinem Ende weist der Hochdruckschlauch 10 einen Anschluss 11 in Form eines Schraubanschlusses 11 mit Überwurfmutter 12 auf. Der Hochdruckschlauch 10 ist von Heizleitern 13 wendelförmig umwickelt, die lediglich in der Fig. 7 dargestellt sind, und aus Gründen der Übersicht in den Fig. 3 und 8 bis 11nicht dargestellt sind. Ferner weist der Heizschlauchkörper 6 eine Wärmeisolationsschicht 14 auf, wobei diese Wärmeisolationsschicht 14 durch ein Umwickeln der Gesamtheit aus Hochdruckschlauch 10 und Heizleitern 13 mit einem Isolationsband gebildet sein kann, wie dies schematisch in der Fig. 7 dargestellt ist. Ferner weist der Heizschlauchkörper 6 eine die äußerste Lage des Heizschlauchkörpers 6 bildende schlauchförmige Außenhülle 15 aus einem Polyamidgewebe auf.

Der Heizschlauch 3 weist ferner ein mit dem Hochdruckschlauch 10 verbundenes Anschlussstück 16 auf, wobei das Anschlussstück 16 gewinkelt ausgebildet ist und einen Durchgangskanal 17 zum Durchleiten des fließfähigen Mediums durch das Anschlussstück 16 aufweist. Das Anschlussstück 16 weist einen ersten Schenkel 18 mit einer ersten Längsachse L1 und einen gewinkelt zu dem ersten Schenkel 18 ausgebildeten zweiten Schenkel 19 mit einer zweiten Längsachse L2 auf. Der erste Schenkel 18 und der zweite Schenkel 19 schließen vorliegend einen Winkel α von 45° ein.

Der erste Schenkel 18 weist ein zu dem Innengewinde des Schraubanschlusses 11 des Hochdruckschlauchs 10 korrespondierendes Außengewinde 22 auf. Das Anschlussstück 16 ist mit dem Hochdruckschlauch 10 durch Verschrauben der Überwurfmutter 12 mit dem Außengewinde 22 lösbar verbunden. Der abgewinkelte zweite Schenkel 19 weist einen Kopplungsanschluss 20 in Form eines Steckers einer Steckkupplung auf. Dieser Kopplungsanschluss 20 dient zum Herstellen einer Fluidverbindung zwischen dem Heizschlauch 3 und dem Auftragskopf 2 durch Ankoppeln, vorliegend Einstecken, des als Stecker ausgebildeten Kopplungsanschlusses 20 in eine dazu korrespondierende Kopplungsbuchse 23 des Auftragskopfs 2. Die Kopplungsbuchse 23 ist vorliegend in Form einer abgestuften Bohrung ausgebildet. Der Kopplungsanschluss 20 weist einen dazu korrespondierenden, abgestuften Außendurchmesser auf. Das Einstecken des Kopplungsanschlusses 20 in die Kopplungsbuchse 23 erfolgt entlang einer Kopplungsachse L2 des Kopplungsanschlusses 20, die vorliegend mit einer Längsachse L2 des zweiten Schenkels 19 zusammenfällt. Durch die abgestuften Durchmesser wird das Koppeln des Anschlussstücks 16 mit dem Auftragskopf 2 erleichtert, da durch die abgestuften Durchmesser eine Selbstzentrierung erfolgt.

Wie insbesondere der Fig. 3 zu entnehmen ist, ist der gegenüber der Endkappe 7 hervorstehende Bereich des zweiten Schenkels 19 annähernd vollständig in den Auftragskopf 2 angeordnet. Dadurch werden Wärmeverluste im Übergangsbereich zwischen dem Heizschlauch 3 und dem Auftragskopf 2 reduziert.

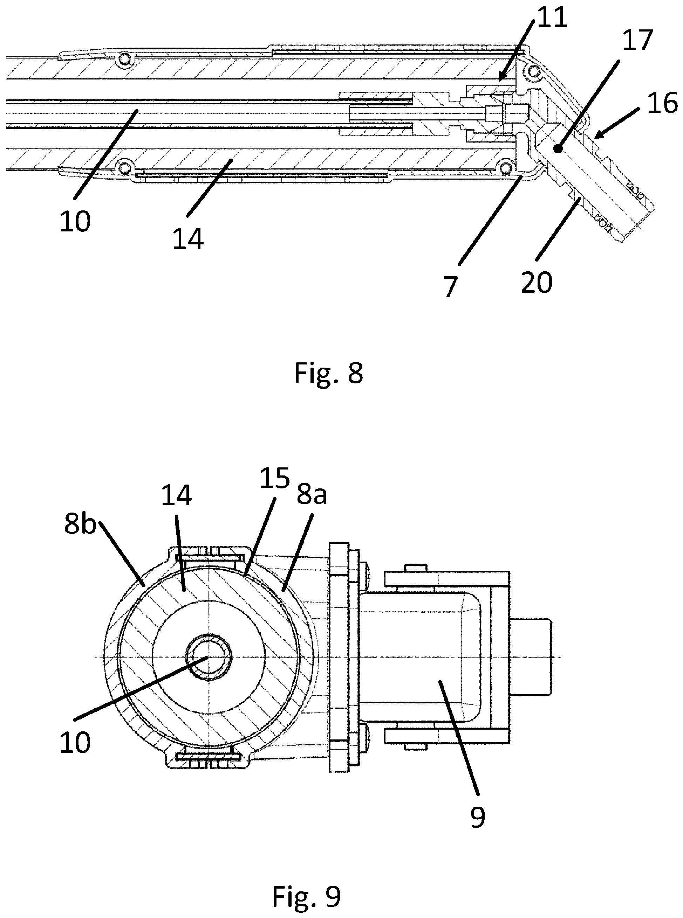

Wie insbesondere der Fig. 8 zu entnehmen ist, ist der zweite Schenkel 19 zumindest teilweise in einem von der Endkappe 7 umschlossenen Bereich ausgebildet. Die Endkappe 7 ist dabei korrespondierend zu dem abgewinkelten Anschlussstück 16 abgewinkelt ausgebildet und weist einen im Wesentlichen hohlzylindrisch ausgebildeten Mantelabschnitt auf und einen abgewinkelten Deckelabschnitt auf. Der Mantelabschnitt umschließt den ersten Schenkel 18 umlaufend. Der abgewinkelte Deckelabschnitt umschließt den zweiten Schenkel 19 teilweise, wobei die Endkappe 7 mit einer an einer Außenseite des zweiten Schenkels 19 ausgebildeten Nut 21 umlaufend in Eingriff ist. An die Nut 21 schließt sich der Kopplungsanschluss 20 an, nämlich derart, dass dieser gegenüber der Endkappe 7 hervorsteht. Dadurch, dass der zweite Schenkel 19 teilweise innerhalb der Endkappe 7 ausgebildet ist, ist verhindert, dass sich das Anschlussstück 16 um die Längsachse L1 des ersten Schenkels 18 gegenüber dem Hochdruckschlauch 10 dreht. Dadurch wird ein Lösen der an sich lösbaren Schraubverbindung zwischen dem Anschlussstück 16 und dem Hochdruckschlauch 10 verhindert. Bei montierter Endkappe 7 bildet somit das Anschlussstück 16 einen integralen Bestandteil des Heizschlauchs 3, wodurch auf einfache Weise und ohne separate Bauteile ein Heizschlauch 3 mit einem zu der Längserstreckungsachse des Heizschlauchs 3 im Bereich der Endkappe 7 abgewinkelten Kopplungsanschluss 20 gebildet ist.

Um unterschiedliche Abgangsrichtungen des Heizschlauchs 3 von dem Auftragskopf 2 zu verwirklichen, ist der Kopplungsanschluss 20 in der Kopplungsbuchse 23 um die Kopplungsachse L2 drehbar, derart, dass zumindest in einem drucklosen Zustand des Heizschlauchs 3 der Heizschlauch 3 um die Kopplungsachse L2 drehbar ist. Dadurch können durch Drehen des Heizschlauchs 3 um die Kopplungsachse L2 unterschiedliche Abgangsrichtungen des Heizschlauchs 3 von dem Auftragskopf 2 verwirklicht werden.

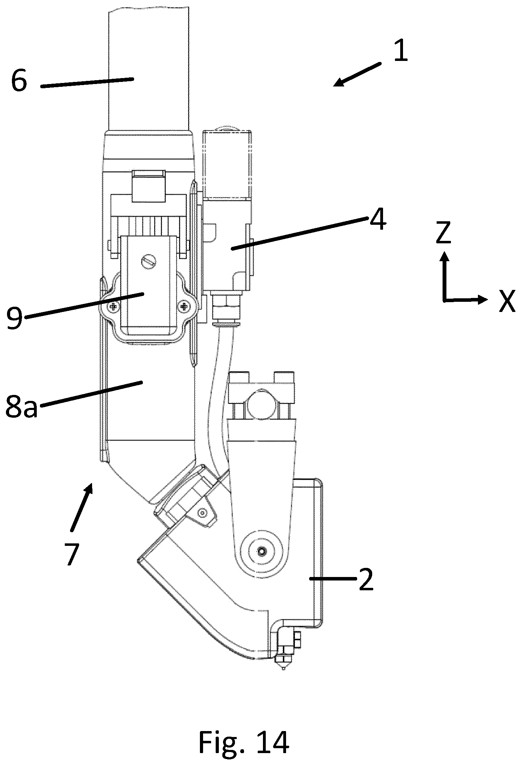

Wie insbesondere der Fig. 3 zu entnehmen ist, sind die Kopplungsachse L2 und die Längsachse L3 der Ventilstange 26 zueinander gewinkelt ausgebildet. Die Abwinkelung korrespondiert dabei zu der Abwinkelung des Anschlussstücks 16, sodass in einer ersten Drehstellung der Heizschlauchs 3 in einem Winkel von 90° zu der Längsachse L3 der Ventilstange 26 von dem Auftragskopf 2 abgeht und in einer zweiten Drehstellung der Heizschlauchs 3 in einem Winkel von 0° zu der Längsachse L3 der Ventilstange 26 von dem Auftragskopf 2 abgeht. Diese zwei unterschiedlichen Konfigurationen bzw. Abgangsrichtungen sind beispielhaft in den Fig. 2 und 14 dargestellt.

Bei der in der Fig. 2 gezeigten Konfiguration ist der Auftragskopf 2 derart angeordnet, dass das Auftragen bzw. Ausgeben des Klebstoffs aus der Ausgabeöffnung 25 entgegen der vertikalen Richtung Z erfolgt. Der Heizschlauch 3 ist dabei derart gedreht, dass dieser in einem Winkel von 90° zu der Längsachse L3 der Ventilstange 26 von dem Auftragskopf 2 abgeht, somit in der in der horizontalen Richtung X abgeht.

Die Fig. 14 zeigt die zweite Konfiguration unter Verwendung derselben Komponenten, nämlich desselben Heizschlauchs 3 und desselben Auftragskopfs 2, wobei der Heizschlauch 3 hinsichtlich seiner Abgangsrichtung zu dem Auftragskopf 2 verändert ist. In der Fig. 14 ist der Auftragskopf 2 wiederum derart angeordnet, dass der Klebstoffauftrag entgegen der vertikalen Richtung Z erfolgt. Der Heizschlauch 3 ist um 180° um die Kopplungsachse L2 gedreht im Vergleich zu der Konfiguration gemäß der Fig. 2. Dadurch ist die Abgangsrichtung des Heizschlauchs 3 ebenfalls verändert, sodass der Heizschlauchs 3 in einem Winkel von 0° zu der Längsachse L3 der Ventilstange 26 von dem Auftragskopf 2 und somit anstatt in der horizontalen Richtung X entgegen der vertikalen Richtung Z von dem Auftragskopf 2 abgeht. Darüber hinaus ist die Anordnung des Magnetventils 4 an dem Heizschlauch 3 verändert worden.

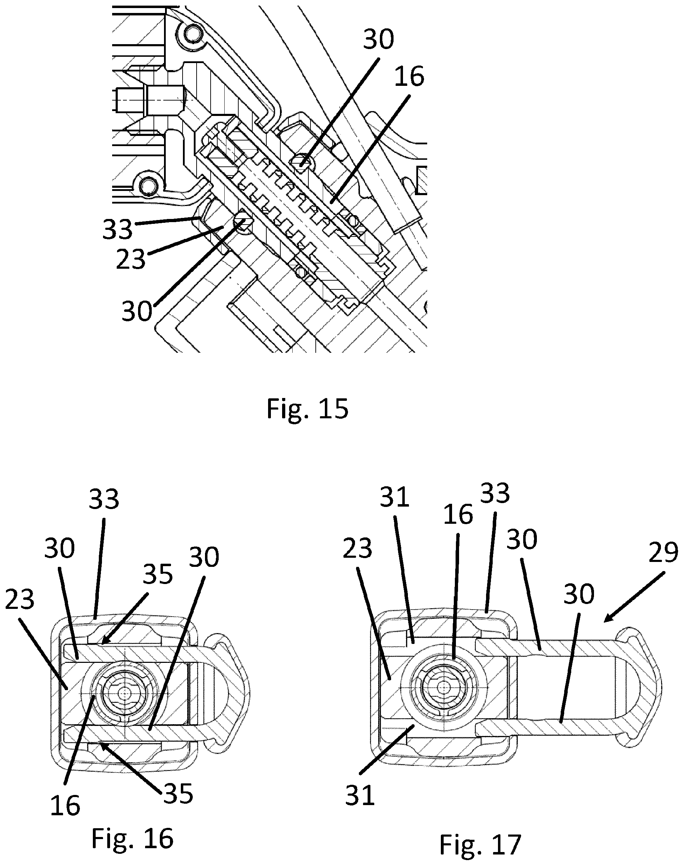

Wie insbesondere der Fig. 15 und der Fig. 16 zu entnehmen ist, ist das Anschlussstück 16 in der mit der Kopplungsbuchse 23 gekoppelten Position über einen verschiebbaren Verschlussschieber 29 in der Kopplungsbuchse 23 gesichert. Der Verschlussschieber 29 weist zwei Sicherungsschenkel 30 auf, wobei die Kopplungsbuchse 23 zwei Durchgangsöffnungen 31 zum Einschieben der Sicherungsschenkel 30 aufweist, wobei die Durchgangsöffnungen 31 die Kopplungsbuchse 23 durchsetzen, derart, dass die Sicherungsschenkel 30 von zwei gegenüberliegenden Seiten aus in die Durchgangsöffnungen 31 einschiebbar sind, wobei das Anschlussstück 16 an seiner Außenseite eine umlaufende Sicherungsnut 32 aufweist, wobei in der gekoppelten Position die Durchgangsöffnungen 31 mit der Sicherungsnut 32 fluchten. Zum Erreichen einer Verschlussstellung des Verschlussschiebers 29 werden die Sicherungsschenkel 30 durch die Durchgangsöffnungen 31 in die umlaufende Sicherungsnut 32 eingeschoben, wodurch in der Verschlussstellung das Anschlussstück 16 in der Kopplungsbuchse 23 gesichert ist. Die Verschlussstellung des Verschlussschiebers 29 ist in der Fig. 16 in einem Querschnitt gezeigt. Die Fig. 17 hingegen zeigt eine Offenstellung des Verschlussschiebers 29, in der die Sicherungsschenkel 30 und die Sicherungsnut 32 außer Eingriff sind. **In** diesem Zustand kann das Anschlussstück 16 aus der Kopplungsbuchse 23 herausgezogen werden.

Der Verschlussschieber 29 ist über eine auf die Kopplungsbuchse 23 aufgesteckte Sicherungskappe 33 verliersicher in der Kopplungsbuchse 23 gehalten, wobei die Sicherungskappe 23 einen Deckelabschnitt mit einer Öffnung für das Anschlussstück 16 und einen an den Deckelabschnitt anschließenden Mantelabschnitt 34 aufweist, wobei die Sicherungsschenkel 30 den Mantelabschnitt 34 durchsetzen, wobei ein Verschieben des Verschlussschiebers 29 von der Verschlussstellung über eine Offenstellung, in der die Sicherungsschenkel 30 und die Sicherungsnut 32 außer Eingriff sind, hinaus durch einen mit dem Mantelabschnitt 34 zusammenwirkenden Anschlag 35 des jeweiligen Sicherungsschenkels 30 verhindert ist.

Die Sicherungskappe 33 ist derart gestaltet, dass diese auf die Kopplungsbuchse 23 aufgesteckt werden kann bzw. von dieser entfernt werden kann, wenn der Heizschlauch 3 von dem Auftragskopf 2, somit das Anschlussstück 16 von der Kopplungsbuchse 23, getrennt ist.. Zu diesem Zweck weist der Mantelabschnitt 34 zwei in Aufsetzrichtung der Sicherungskappe 33 offene Einkerbungen 36 auf, die der Aufnahme der Sicherungsschenkel 30 dienen.

### Bezugszeichenliste

- 1: Auftragssystem
- 2: Auftragskopf
- 3: Heizschlauch
- 4: Magnetventil
- 5: Pneumatikschlauch
- 6: Heizschlauchkörper
- 7: Endkappe
- 8a, 8b: Halbschale
- 9: Anschlussbuchse
- 10: Hochdruckschlauch
- 11: Anschluss
- 12: Überwurfmutter
- 13: Heizleiter
- 14: Wärmeisolationsschicht
- 15: Außenhülle
- 16: Anschlussstück
- 17: Durchgangskanal
- 18: erster Schenkel
- 19: zweiter Schenkel
- 20: Kopplungsanschluss
- 21: Nut
- 22: Außengewinde
- 23: Kopplungsbuchse
- 24: Dosierventil
- 25: Ausgabeöffnung
- 26: Ventilstange
- 27: Heizpatrone
- 28: Temperatursensor
- 29: Verschlussschieber
- 30: Sicherungsschenkel
- 31: Durchgangsöffnung
- 32: Sicherungsnut
- 33: Sicherungsdeckel
- 34: Mantelabschnitt
- 35: Anschlag
- 36: Einkerbung

- L1: erste Längsachse
- L2: zweite Längsachse bzw. Kopplungsachse
- L3: Längsachse der Ventilstange

## Patentansprüche

1. Heizschlauch (3) zum Durchleiten von einem fließfähigen Medium aufweisend:
- einen flexiblen Heizschlauchkörper (6), aufweisend:
∘ einen Hochdruckschlauch (10), wobei der Hochdruckschlauch (10) eine Schlauchseele zum Durchleiten des fließfähigen Mediums und eine die Schlauchseele umgebende Verstärkung aufweist,
∘ zumindest einen Heizleiter (13) zum Erwärmen des in dem Hochdruckschlauch (10) fließenden Mediums,
∘ eine den Hochdruckschlauch (10) und den zumindest einen Heizleiter (13) umgebende Wärmeisolationsschicht (14) aus einem Wärmedämmmaterial,
∘ eine die Wärmeisolationsschicht (14) umgebende Außenhülle (15),
- ein mit dem Hochdruckschlauch (10) verbundenes Anschlussstück (16), wobei das Anschlussstück (16) einen Durchgangskanal (17) zum Durchleiten des fließfähigen Mediums durch das Anschlussstück (16) und einen Kopplungsanschluss (20) aufweist zum Herstellen einer Fluidverbindung zwischen dem Heizschlauch (3) und einem externen Gerät durch Ankoppeln des externen Geräts entlang einer Kopplungsachse (L2) des Kopplungsanschlusses (20),
- eine Endkappe (7), wobei die Endkappe (7) einen Endabschnitt des flexiblen Heizschlauchkörpers (6) abdeckt,
wobei das Anschlussstück (16) als abgewinkeltes Anschlussstück (16) ausgebildet ist, das einen ersten Schenkel (18) und einen gewinkelt zu dem ersten Schenkel (18) ausgebildeten zweiten Schenkel (19) aufweist, wobei das Anschlussstück (16) einen die Schenkel (18, 19) durchsetzenden Durchgangskanal (17) zum Durchleiten des fließfähigen Mediums durch das Anschlussstück (16) aufweist, wobei der erste Schenkel (18) mit dem Hochdruckschlauch (20) verbunden ist, wobei der zweite Schenkel (19) zumindest teilweise in einem von der Endkappe (7) umschlossenen Bereich ausgebildet ist und wobei der Kopplungsanschluss (20) im Bereich des zweiten Schenkels (19) ausgebildet ist, wobei der Kopplungsanschluss (20) einen Bestandteil einer Steckkupplung bildet, wobei der Kopplungsanschluss (20) den Stecker der Steckkupplung bildet, wobei ein Winkel (α) zwischen dem ersten Schenkel (18) und dem zweiten Schenkel (19) des Anschlussstücks (16) zwischen 40° und 50° beträgt.

2. Heizschlauch (3) nach Anspruch 1, wobei der Stecker als Bestandteil einer drehbaren Steckkupplung ausgebildet ist, sodass der Heizschlauch (3) ohne zusätzliche Teile und ohne Werkzeuge in unterschiedlichen Anordnungen und Abgangsrichtungen montiert und betrieben werden kann.

3. Heizschlauch (3) nach einem der Ansprüche 1 bis 2, wobei der Kopplungsanschluss (20) außerhalb der Endkappe (7) angeordnet ist.

4. Heizschlauch (3) nach einem der Ansprüche 1 bis 3, wobei das Anschlussstück (16) einteilig ausgebildet ist

5. Heizschlauch (3) nach einem der Ansprüche 1 bis 4, wobei die Verbindung zwischen dem ersten Schenkel (18) und dem Hochdruckschlauch (10) als Schraubverbindung ausgebildet ist, deren Schraubenachse der Längsachse (L1) des ersten Schenkels (18) entspricht.

6. Heizschlauch (3) nach einem der Ansprüche 1 bis 5, wobei die Endkappe (7) mit einer an einer Außenseite des zweiten Schenkels (19) ausgebildeten Nut (21) in Eingriff ist.

7. Heizschlauch (3) nach einem der Ansprüche 1 bis 6, wobei die Endkappe (7) korrespondierend zu dem abgewinkelten Anschlussstück (16) abgewinkelt ausgebildet ist.

8. Heizschlauch (3) nach einem der Ansprüche 1 bis 7, wobei die Endkappe (7) zwei Halbschalen (8a, 8b) aufweist.

9. Heizschlauch (3) nach einem der Ansprüche 1 bis 8, wobei die Wärmeisolationsschicht (14) zumindest einen Teilbereich des ersten Schenkels (18) umschließt.

10. Heizschlauch (3) nach einem der Ansprüche 1 bis 9, wobei der Durchgangskanal (17) des Anschlussstücks (16) durch eine erste entlang einer Längsachse (L1) des ersten Schenkels (18) des Anschlussstücks (16) verlaufende Bohrung und durch eine zweite entlang einer Längsachse (L2) des zweiten Schenkels (19) des Anschlussstücks (16) verlaufende Bohrung gebildet ist.

11. Heizschlauch (3) nach einem der Ansprüche 1 bis 10, wobei der Winkel (α) zwischen dem ersten Schenkel (18) und dem zweiten Schenkel (19) des Anschlussstücks (16) 45° beträgt.

12. Verfahren zum Herstellen eines Heizschlauchs (3) nach einem der Ansprüche 1 bis 11, aufweisend die folgenden Verfahrensschritte:
a) Herstellen oder Bereitstellen eines flexiblen Heizschlauchkörpers (6), der flexible Heizschlauchkörper (6) aufweisend:
∘ einen Hochdruckschlauch (10), wobei der Hochdruckschlauch (10) eine Schlauchseele zum Durchleiten des fließfähigen Mediums und eine die Schlauchseele umgebende Verstärkung aufweist,
∘ zumindest einen Heizleiter (13) zum Erwärmen des in dem Hochdruckschlauch (10) fließenden Mediums,
∘ eine den Hochdruckschlauch (10) und den zumindest einen Heizleiter (13) umgebende Wärmeisolationsschicht (14) aus einem Wärmedämmmaterial,
∘ eine die Wärmeisolationsschicht (14) umgebende Außenhülle (15),
b) Bereitstellen eines abgewinkelten Anschlussstücks (16), wobei das Anschlussstück (16) einen ersten Schenkel (18) und einen gewinkelt zu dem ersten Schenkel (18) ausgebildeten zweiten Schenkel (19) aufweist, wobei das Anschlussstück (16) einen die Schenkel (18, 19) durchsetzenden Durchgangskanal (17) zum Durchleiten des fließfähigen Mediums durch das Anschlussstück (16) aufweist, wobei der erste Schenkel (18) mit dem Hochdruckschlauch (10) lösbar verbindbar ist, wobei der zweite Schenkel (19) einen Kopplungsanschluss (20) aufweist zum Herstellen einer Fluidverbindung zwischen dem Heizschlauch (3) und einem externen Gerät durch Ankoppeln des externen Geräts entlang einer Kopplungsachse (L2) des Kopplungsanschlusses (20),
c) Herstellen der lösbaren Verbindung zwischen dem Hochdruckschlauch (10) und dem ersten Schenkel (18) des Anschlussstücks (16), wobei der Verfahrensschritt c) nach den Verfahrensschritten a) und b) erfolgt,
d) Anbringen einer Endkappe (7) an einem Endabschnitt des Heizschlauchkörpers (6), derart, dass die Endkappe (7) den Endabschnitt des flexiblen Heizschlauchkörpers (6) abdeckt, wobei der zweite Schenkel (19) des Anschlussstücks (16) zumindest teilweise in einem von der Endkappe (7) umschlossenen Bereich ausgebildet ist, wobei der Verfahrensschritt d) nach dem Verfahrensschritt c) erfolgt.

13. Auftragssystem (1) aufweisend einen Heizschlauch (3) nach einem der Ansprüche 1 bis 11 und aufweisend einen Auftragskopf (2) zum Ausgeben des fließfähigen Mediums, wobei der Auftragskopf (2) eine zu dem Kopplungsanschluss (20) korrespondierende Kopplungsbuchse (23) aufweist, wobei der Kopplungsanschluss (20) und die Kopplungsbuchse (23) eine Steckkupplung bilden, wobei der Auftragskopf (2) ein Dosierventil (24) aufweist, um das dem Auftragskopf (2) über den Heizschlauch (3) zugeführte fließfähige Medium selektiv aus einer Ausgabeöffnung (25) des Auftragskopfs (2) auszugeben, wobei das Dosierventil (24) eine Ventilstange (26) aufweist, wobei die Ventilstange (26) zwischen einer Verschlussstellung, in der die Ventilstange (26) die Ausgabeöffnung (25) des Auftragskopfs (2) verschließt, und einer Offenstellung, in der die Ventilstange (26) die Ausgabeöffnung (25) des Auftragskopfs (2) freigibt, entlang einer Längsachse (L3) der Ventilstange (26) verschiebbar ist, wobei die Kopplungsachse (L2) und die Längsachse (L3) der Ventilstange (26) zueinander gewinkelt sind, wobei der Kopplungsanschluss (20) in der Kopplungsbuchse (23) um die Kopplungsachse (L2) drehbar ist.

14. Auftragssystem (1) nach Anspruch 13, wobei das Anschlussstück (16) in der mit der Kopplungsbuchse (23) gekoppelten Position über einen verschiebbaren Verschlussschieber (29) in der Kopplungsbuchse (23) gesichert ist, wobei der Verschlussschieber (29) zwei Sicherungsschenkel (30) aufweist, wobei die Kopplungsbuchse (23) zwei Durchgangsöffnungen (31) zum Einschieben der Sicherungsschenkel (30) aufweist, wobei die Durchgangsöffnungen (31) die Kopplungsbuchse (23) durchsetzen, derart, dass die Sicherungsschenkel (30) von zwei gegenüberliegenden Seiten aus in die Durchgangsöffnungen (30) einschiebbar sind, wobei der Kopplungsanschluss (20) an seiner Außenseite eine umlaufende Sicherungsnut (32) aufweist, wobei in der gekoppelten Position die Durchgangsöffnungen (31) mit der Sicherungsnut (32) fluchten, wobei in einer Verschlussstellung des Verschlussschiebers (29) die Sicherungsschenkel (30) durch die Durchgangsöffnungen (31) in die umlaufende Sicherungsnut (32) eingeschoben sind, zum Sichern des Anschlussstücks (16) in der Kopplungsbuchse (23).

15. Auftragssystem (1) nach Anspruch 14, wobei der Verschlussschieber (29) über eine auf die Kopplungsbuchse (23) aufgesteckte Sicherungskappe (33) verliersicher in der Kopplungsbuchse (23) gehalten ist, wobei die Sicherungskappe (23) einen Deckelabschnitt mit einer Öffnung für das Anschlussstück (16) und einen an den Deckelabschnitt anschließenden Mantelabschnitt (34) aufweist, wobei die Sicherungsschenkel (30) den Mantelabschnitt (34) durchsetzen, wobei ein Verschieben des Verschlussschiebers (29) von der Verschlussstellung über eine Offenstellung, in der die Sicherungsschenkel (30) und die Sicherungsnut (32) außer Eingriff sind, hinaus durch einen mit dem Mantelabschnitt (34) zusammenwirkenden Anschlag (35) des jeweiligen Sicherungsschenkels (30) verhindert ist.

## Claims

1. Heated hose (3) for the passage of a free-flowing medium, having:
- a flexible heated-hose body (6) having:
∘ a high-pressure hose (10), wherein the high-pressure hose (10) has a hose core, for the passage of the free-flowing medium, and a reinforcement surrounding the hose core,
∘ at least one heat conductor (13) for heating the medium flowing in the high-pressure hose (10),
∘ a thermal insulation layer (14) made of a thermally insulating material and surrounding the high-pressure hose (10) and the at least one heat conductor (13),
∘ an outer sleeve (15) surrounding the thermal insulation layer (14),
- an attachment piece (16) connected to the high-pressure hose (10), wherein the attachment piece (16) has a through-channel (17), which allows the free-flowing medium to pass through the attachment piece (16), and a coupling connector (20) for producing a fluidic connection between the heated hose (3) and an external apparatus, by coupling the external apparatus along a coupling axis (L2) of the coupling connector (20),
- an end cap (7), wherein the end cap (7) covers an end portion of the flexible heated-hose body (6),
wherein the attachment piece (16) is designed as an angled attachment piece (16) which has a first limb (18) and, angled with respect to the first limb (18), a second limb (19), wherein the attachment piece (16) has a through-channel (17) which runs through the limbs (18, 19) in order to allow the free-flowing medium to pass through the attachment piece (16), wherein the first limb (18) is connected to the high-pressure hose (20), wherein the second limb (19) is formed at least partially in a region surrounded by the end cap (7), and wherein the coupling connector (20) is formed in the region of the second limb (19), wherein the coupling connector (20) forms a constituent part of a plug coupling, wherein the coupling connector (20) forms the plug of the plug coupling, wherein an angle (α) between the first limb (18) and the second limb (19) of the attachment piece (16) is between 40° and 50°.

2. Heated hose (3) according to Claim 1, wherein the plug is designed as a constituent part of a rotatable plug coupling, so that the heated hose (3) can be mounted and operated in different arrangements and outgoing directions without additional parts and without tools.

3. Heated hose (3) according to either of Claims 1 and 2, wherein the coupling connector (20) is arranged outside the end cap (7).

4. Heated hose (3) according to any one of Claims 1 to 3, wherein the attachment piece (16) is designed in one piece.

5. Heated hose (3) according to any one of Claims 1 to 4, wherein the connection between the first limb (18) and the high-pressure hose (10) is designed as a screw connection, of which the screw axis corresponds to the longitudinal axis (L1) of the first limb (18).

6. Heated hose (3) according to any one of Claims 1 to 5, wherein the end cap (7) is in engagement with a groove (21) formed on an outer face of the second limb (19).

7. Heated hose (3) according to any one of Claims 1 to 6, wherein the end cap (7) has an angled design corresponding to the angled attachment piece (16).

8. Heated hose (3) according to any one of Claims 1 to 7, wherein the end cap (7) has two half-shells (8a, 8b).

9. Heated hose (3) according to any one of Claims 1 to 8, wherein the thermal insulation layer (14) encloses at least a partial region of the first limb (18).

10. Heated hose (3) according to any one of Claims 1 to 9, wherein the through-channel (17) of the attachment piece (16) is formed by a first bore extending along a longitudinal axis (L1) of the first limb (18) of the attachment piece (16) and by a second bore extending along a longitudinal axis (L2) of the second limb (19) of the attachment piece (16).

11. Heated hose (3) according to any one of Claims 1 to 10, wherein the angle (α) between the first limb (18) and the second limb (19) of the attachment piece (16) is 45°.

12. Method for producing a heated hose (3) according to any one of Claims 1 to 11, having the following method steps:
a) producing or providing a flexible heated-hose body (6), the flexible heated-hose body (6) having:
∘ a high-pressure hose (10), wherein the high-pressure hose (10) has a hose core, for the passage of the free-flowing medium, and a reinforcement surrounding the hose core,
∘ at least one heat conductor (13) for heating the medium flowing in the high-pressure hose (10),
∘ a thermal insulation layer (14) made of a thermally insulating material and surrounding the high-pressure hose (10) and the at least one heat conductor (13),
∘ an outer sleeve (15) surrounding the thermal insulation layer (14),
b) providing an angled attachment piece (16), wherein the attachment piece (16) has a first limb (18) and, angled with respect to the first limb (18), a second limb (19), wherein the attachment piece (16) has a through-channel (17) which runs through the limbs (18, 19) in order to allow the free-flowing medium to pass through the attachment piece (16), wherein the first limb (18) is releasably connectable to the high-pressure hose (10), wherein the second limb (19) has a coupling connector (20) for producing a fluidic connection between the heated hose (3) and an external apparatus, by coupling the external apparatus along a coupling axis (L2) of the coupling connector (20),
c) producing the releasable connection between the high-pressure hose (10) and the first limb (18) of the attachment piece (16), wherein method step c) takes place after method steps (a) and (b),
d) arranging an end cap (7) on an end portion of the heated-hose body (6), in such a way that the end cap (7) covers the end portion of the flexible heated-hose body (6), wherein the second limb (19) of the attachment piece (16) is formed at least partially in a region enclosed by the end cap (7), wherein method step d) takes place after method step c).

13. Application system (1) having a heated hose (3) according to any one of Claims 1 to 11 and having an application head (2) for dispensing the free-flowing medium, wherein the application head (2) has a coupling socket (23) corresponding to the coupling connector (20), wherein the coupling connector (20) and the coupling socket (23) form a plug coupling, wherein the application head (2) has a dosing valve (24), so that the free-flowing medium supplied to the application head (2) via the heated hose (3) can be selectively dispensed from a dispensing opening (25) of the application head (2), wherein the dosing valve (24) has a valve rod (26), wherein the valve rod (26) is displaceable, along a longitudinal axis (L3) of the valve rod (26), between a closure position, in which the valve rod (26) closes the dispensing opening (25) of the application head (2), and an open position, in which the valve rod (26) frees the dispensing opening (25) of the application head (2), wherein the coupling axis (L2) and the longitudinal axis (L3) of the valve rod (26) are angled relative to each other, wherein the coupling connector (20) is rotatable in the coupling socket (23) about the coupling axis (L2).

14. Application system (1) according to Claim 13, wherein the attachment piece (16), in the position coupled to the coupling socket (23), is secured in the coupling socket (23) via a displaceable closure slide (29), wherein the closure slide (29) has two securing limbs (30), wherein the coupling socket (23) has two through-openings (31) for the insertion of the securing limbs (30), wherein the through-openings (31) run through the coupling socket (23) in such a way that the securing limbs (30) are insertable into the through-openings (30) from two opposite sides, wherein the coupling connector (20) has a circumferential securing groove (32) on its outer face, wherein the through-openings (31) are flush with the securing groove (32) in the coupled position, wherein, in a closure position of the closure slide (29), the securing limbs (30) are inserted through the through-openings (31) into the circumferential securing groove (32), in order to secure the attachment piece (16) in the coupling socket (23).

15. Application system (1) according to Claim 14, wherein the closure slide (29) is held captively in the coupling socket (23) via a securing cap (33) plugged onto the coupling socket (23), wherein the securing cap (23) has a cover portion, with an opening for the attachment piece (16), and a jacket portion (34) adjoining the cover portion, wherein the securing limbs (30) pass through the jacket portion (34), wherein a displacement of the closure slide (29) from the closure position and past an open position, in which the securing limbs (30) and the securing groove (32) are disengaged, is prevented by the respective securing limb (30) having a stop (35) interacting with the jacket portion (34).

## Revendications

1. Tuyau chauffant (3) destiné à acheminer un milieu fluide, comportant :
- un corps (6) de tuyau chauffant flexible, comportant :
∘ un tuyau à haute pression (10), le tuyau à haute pression (10) comportant un noyau de tuyau destiné à acheminer le milieu fluide et un renforcement entourant le noyau de tuyau,
∘ au moins un conducteur chauffant (13) destiné à chauffer le milieu circulant dans le tuyau à haute pression (10),
∘ une couche d'isolation thermique (14) entourant le tuyau à haute pression (10) et l'au moins un conducteur chauffant (13), composée d'un matériau d'isolation thermique,
∘ une gaine extérieure (15) entourant la couche d'isolation thermique (14),
- une pièce de raccordement (16) reliée au tuyau à haute pression (10), la pièce de raccordement (16) comportant un canal de passage (17) destiné à acheminer le milieu fluide à travers la pièce de raccordement (16) et un raccord d'accouplement (20) destiné à établir une communication fluidique entre le tuyau chauffant (3) et un appareil externe par accouplement de l'appareil externe le long d'un axe d'accouplement (L2) du raccord d'accouplement (20),
- un capuchon d'extrémité (7), le capuchon d'extrémité (7) recouvrant une section d'extrémité du corps (6) de tuyau chauffant flexible,
la pièce de raccordement (16) étant formée comme une pièce de raccordement coudée (16), qui comporte une première branche (18) et une seconde branche (19) formant un angle par rapport à la première branche (18), la pièce de raccordement (16) comportant un canal de passage (17) traversant les branches (18, 19) destiné à acheminer le milieu fluide à travers la pièce de raccordement (16), la première branche (18) étant reliée au tuyau à haute pression (20), la seconde branche (19) étant formée au moins en partie dans une zone entourée par le capuchon d'extrémité (7), et le raccord d'accouplement (20) étant formé dans la zone de la seconde branche (19), le raccord d'accouplement (20) faisant partie d'un accouplement enfichable, le raccord d'accouplement (20) formant la fiche de l'accouplement enfichable, un angle (α) entre la première branche (18) et la seconde branche (19) de la pièce de raccordement (16) étant compris entre 40° et 50°.

2. Tuyau chauffant (3) selon la revendication 1, la fiche étant formée comme un élément constitutif d'un accouplement enfichable rotatif si bien que le tuyau chauffant (3) peut être monté et peut fonctionner dans différentes dispositions et directions de départ sans pièces supplémentaires et sans outils.

3. Tuyau chauffant (3) selon l'une des revendications 1 à 2, le raccord d'accouplement (20) étant disposé à l'extérieur du capuchon d'extrémité (7).

4. Tuyau chauffant (3) selon l'une des revendications 1 à 3, la pièce de raccordement (16) étant réalisée d'une seule pièce.

5. Tuyau chauffant (3) selon l'une des revendications 1 à 4, la liaison entre la première branche (18) et le tuyau à haute pression (10) étant formée comme une liaison vissée dont l'axe de vissage correspond à l'axe longitudinal (L1) de la première branche (18).

6. Tuyau chauffant (3) selon l'une des revendications 1 à 5, le capuchon d'extrémité (7) étant en prise avec une rainure (21) formée sur un côté extérieur de la seconde branche (19).

7. Tuyau chauffant (3) selon l'une des revendications 1 à 6, le capuchon d'extrémité (7) étant formé de manière coudée en correspondance avec la pièce de raccordement (16) coudée.

8. Tuyau chauffant (3) selon l'une des revendications 1 à 7, le capuchon d'extrémité (7) comportant deux demicoques (8a, 8b).

9. Tuyau chauffant (3) selon l'une des revendications 1 à 8, la couche d'isolation thermique (14) entourant au moins une zone partielle de la première branche (18).

10. Tuyau chauffant (3) selon l'une des revendications 1 à 9, le canal de passage (17) de la pièce de raccordement (16) étant formé par un premier alésage s'étendant le long d'un axe longitudinal (L1) de la première branche (18) de la pièce de raccordement (16) et par un deuxième alésage s'étendant le long d'un axe longitudinal (L2) de la seconde branche (19) de la pièce de raccordement (16).

11. Tuyau chauffant (3) selon l'une des revendications 1 à 10, l'angle (α) entre la première branche (18) et la seconde branche (19) de la pièce de raccordement (16) étant de 45°.

12. Procédé de fabrication d'un tuyau chauffant (3) selon l'une des revendications 1 à 11, comportant les étapes de procédé suivantes :
a) fabrication ou fourniture d'un corps (6) de tuyau chauffant flexible, le corps (6) de tuyau chauffant flexible comportant :
∘ un tuyau à haute pression (10), le tuyau à haute pression (10) comportant un noyau de tuyau destiné à acheminer le milieu fluide et un renforcement entourant le noyau de tuyau,
∘ au moins un conducteur chauffant (13) destiné à chauffer le milieu circulant dans le tuyau à haute pression (10),
∘ une couche d'isolation thermique (14) entourant le tuyau à haute pression (10) et l'au moins un conducteur chauffant (13), composée d'un matériau d'isolation thermique,
∘ une gaine extérieure (15) entourant la couche d'isolation thermique (14),
b) fourniture d'une pièce de raccordement (16) coudée, la pièce de raccordement (16) comportant une première branche (18) et une seconde branche (19) formant un angle par rapport à la première branche (18), la pièce de raccordement (16) comportant un canal de passage (17) traversant les branches (18, 19) destiné à acheminer le milieu fluide à travers la pièce de raccordement (16), la première branche (18) pouvant être reliée de manière amovible au tuyau à haute pression (10), la seconde branche (19) comportant un raccord d'accouplement (20) destiné à établir une communication fluidique entre le tuyau chauffant (3) et un appareil externe par accouplement de l'appareil externe le long d'un axe d'accouplement (L2) du raccord d'accouplement (20),
c) établissement de la liaison amovible entre le tuyau à haute pression (10) et la première branche (18) de la pièce de raccordement (16), l'étape de procédé c) étant effectuée après les étapes de procédé a) et b),
d) mise en place d'un capuchon d'extrémité (7) sur une section d'extrémité du corps (6) de tuyau chauffant de telle manière que le capuchon d'extrémité (7) recouvre la section d'extrémité du corps (6) de tuyau chauffant flexible, la seconde branche (19) de la pièce de raccordement (16) étant formée au moins en partie dans une zone entourée par le capuchon d'extrémité (7), l'étape de procédé d) étant effectuée après l'étape de procédé c).

13. Système d'application (1) comportant un tuyau chauffant (3) selon l'une des revendications 1 à 11 et comportant une tête d'application (2) destinée à distribuer le milieu fluide, la tête d'application (2) comportant une douille d'accouplement (23) correspondant au raccord d'accouplement (20), le raccord d'accouplement (20) et la douille d'accouplement (23) formant un accouplement enfichable, la tête d'application (2) comportant une soupape de dosage (24) pour distribuer sélectivement le milieu fluide amené à la tête d'application (2) par le tuyau chauffant (3) depuis un orifice de distribution (25) de la tête d'application (2), la soupape de dosage (24) comportant une tige (26) de soupape, la tige (26) de soupape pouvant être coulissée le long d'un axe longitudinal (L3) de la tige (26) de soupape entre une position fermée, dans laquelle la tige (26) de soupape ferme l'orifice de distribution (25) de la tête d'application (2), et une position ouverte, dans laquelle la tige (26) de soupape ouvre l'orifice de distribution (25) de la tête d'application (2), l'axe d'accouplement (L2) et l'axe longitudinal (L3) de la tige (26) de soupape étant inclinés l'un par rapport à l'autre, le raccord d'accouplement (20) pouvant tourner autour de l'axe d'accouplement (L2) dans la douille d'accouplement (23).

14. Système d'application (1) selon la revendication 13, la pièce de raccordement (16) étant bloquée dans la douille d'accouplement (23) par un coulisseau de fermeture (29) pouvant être coulissé dans la position couplée à la douille d'accouplement (23), le coulisseau de fermeture (29) comportant deux branches de blocage (30), la douille d'accouplement (23) comportant deux orifices de passage (31) pour l'introduction des branches de blocage (30), les orifices de passage (31) traversant la douille d'accouplement (23) de telle manière que les branches de blocage (30) peuvent être introduites depuis deux côtés opposés dans les orifices de passage (30), le raccord d'accouplement (20) comportant sur son côté extérieur une rainure de blocage périphérique (32), les orifices de passage (31) étant alignés avec la rainure de blocage (32) dans la position couplée, les branches de blocage (30) étant insérées, dans une position de fermeture du coulisseau de fermeture (29), à travers les orifices de passage (31) dans la rainure de blocage périphérique (32) pour bloquer la pièce de raccordement (16) dans la douille d'accouplement (23).

15. Système d'application (1) selon la revendication 14, le coulisseau de fermeture (29) étant maintenu de manière imperdable dans la douille d'accouplement (23) par un capuchon de blocage (33) emboîté sur la douille d'accouplement (23), le capuchon de blocage (23) comportant une section de couvercle avec un orifice pour la pièce de raccordement (16) et une section d'enveloppe (34) se raccordant à la section de couvercle, les branches de blocage (30) traversant la section d'enveloppe (34), un coulissement du coulisseau de fermeture (29) étant empêché de la position de fermeture au-delà d'une position ouverte, dans laquelle les branches de blocage (30) et la rainure de blocage (32) sont hors prise, par une butée (35) de la branche de blocage(30) respective coopérant avec la section d'enveloppe (34).
